# EUROPEAN PATENT SPECIFICATION

(11) **EP 4 596 215 B1**
(45) Date of publication and mention of the grant of the patent: **29.04.2026**
(21) Application number: 24785178.5
(22) Date of filing: 02.04.2024
(51) Int. Cl.: B29C 51/26, B29C 51/08, H01M 50/105, B29C 43/36, B29L 31/00, B29C 43/34, B29C 51/14, H01M 50/126, B21D 22/20, B21D 22/22

(54) **POUCH MANUFACTURING DEVICE**
BEUTELHERSTELLUNGSVORRICHTUNG
DISPOSITIF DE FABRICATION DE POCHE

(30) Priority: 03.04.2023 KR 20230043649; 01.04.2024 KR 20240044116
(43) Date of publication of application: 06.08.2025
(73) Proprietor: LG Energy Solution, Ltd., Seoul 07335 (KR)
(72) Inventor: KANG, Gyung Soo, Daejeon 34122 (KR); KIM, Sang Hun, Daejeon 34122 (KR); CHOI, Hong Jin, Daejeon 34122 (KR); YU, Hyung Kyun, Daejeon 34122 (KR); LEE, Jae Ho, Daejeon 34122 (KR); LEE, Ji Sun, Daejeon 34122 (KR)
(74) Representative: Goddar, Heinz J.
(86) International application number: PCT/KR2024/004262
(87) International publication number: WO 2024/210473

(56) References cited:
- WO-A1-2022/250482
- JP-A- 2011 104 961
- JP-A- 2016 036 963
- KR-A- 20110 076 878
- KR-A- 20130 110 859
- KR-A- 20130 110 859
- KR-A- 20190 038 094
- KR-A- 20190 038 094
- KR-A- 20220 054 126
- KR-A- 20220 054 126

## Description

### TECHNICAL FIELD

The present disclosure relates to a pouch making apparatus.

### BACKGROUND ART

In general, as opposed to primary batteries that cannot be recharged, secondary batteries refer to rechargeable batteries and are being widely used in electronic devices such as mobile phones, laptop computers and camcorders, or electric vehicles. In particular, lithium secondary batteries are increasingly used in a wide range of applications due to higher capacity than nickel-cadmium batteries or nickel-hydrogen batteries and high energy density.

Secondary batteries may be classified into cylindrical or prismatic batteries in which an electrode assembly is included in a cylindrical or prismatic metal can, and pouch-type batteries in which an electrode assembly is included in a pouch-type case of a laminate sheet, according to the shape of a battery case.

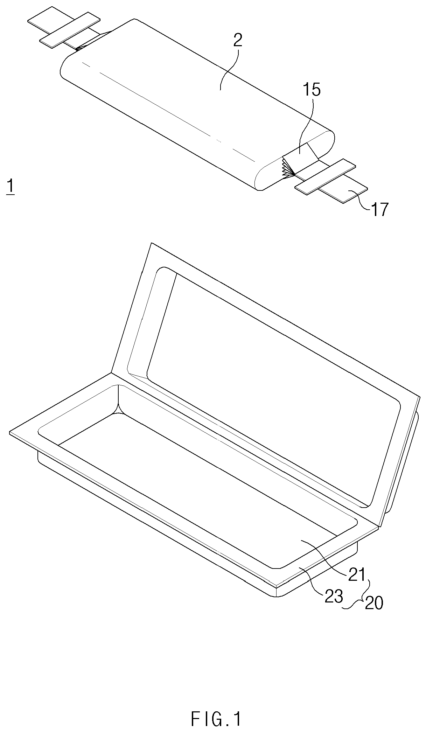

FIG. 1 is a diagram showing an example of a pouch-type secondary battery. The pouch-type secondary battery (or a pouch-type cell) 1 includes an electrode assembly 2 including electrodes and a separator stacked in an alternating manner, and a pouch-type packaging material 20 accommodating the electrode assembly 2. Each of the electrodes of the electrode assembly 2 may be connected to each of electrode tabs 15. The electrode tabs 15 may be welded to each other at a predetermined area and then connected to an electrode lead 17 by welding. The packaging material 20 includes a receiving portion 21 (a cup portion) in which the electrode assembly 2 is received. The receiving portion 21 of the packaging material 20 may be formed as one or two recessed portions. FIG. 1 shows the receiving portion 21 formed as two recessed portions. The packaging material 20 may be made through a forming process of a pouch film. A sealing portion 23 (a terrace) is formed around the receiving portion 21 by sealing.

Meanwhile, the pouch-type packaging material 20 may be made by partially pressing the pouch film. For example, when a part of the pouch film is pressed by a punch, the receiving portion 21 may be formed in the pouch film. During the pressing, it is general to press and hold the other part of the pouch film by a stripper. However, the stripper usually presses the pouch film uniformly. The uniform pressing is prone to wrinkles near the part of the pouch film that is pressed by the punch. Recently, applying a layer of stainless steel as a metal layer of the pouch film is being contemplated. However, because metals such as stainless steel have higher stiffness, when the forming process is performed as described above, wrinkling occur very easily in the pouch film during the forming.

KR 2019 0038094 A, KR 2022 0054126 A and WO 2022/250482 A1 relate to a respective pouch forming apparatus for a secondary battery. KR 2013 0110859 A relates to a method and system for concentrating and transmitting an external heat source for improving moldability in an embossable material forming process.

### SUMMARY

### TECHNICAL PROBLEM

The present disclosure is directed to providing a pouch making apparatus for reducing or preventing cracks or wrinkles in a pouch film during a forming process of the pouch film.

### TECHNICAL SOLUTION

The invention is defined by the features of the independent claims. In an embodiment, a pouch making apparatus may include a lower die including a forming area that is recessed inward to form a cup portion in a pouch film and a support area that is flat on an outer side of the forming area, a punch configured to press the pouch film to be placed on the lower die toward the forming area, a stripper configured to press the pouch film toward the support area in order to support the pouch film during the pressing by the punch, and a local press portion to cause a first area to be pressed more strongly than a second area among the first area and the second area of the pouch film pressed by the stripper.

In another embodiment, the local press portion may include a protruding portion in any one of the stripper and the support area facing the stripper, and a receding portion that matches the protruding portion in the other one of the stripper and the support area facing the stripper.

In another embodiment, the protruding portion may protrude toward the receding portion, and the receding portion may be recessed to accommodate the protruding portion.

In another embodiment, the protruding portion may include a long side parallel protruding portion disposed parallel to a long side among sides of the forming area, and a short side parallel protruding portion disposed parallel to a short side extended perpendicularly to the long side among the sides of the forming area.

In another embodiment, an end of the long side parallel protruding portion may protrude outward beyond an end of the long side among the sides of the forming area along an extension direction of the long side parallel protruding portion.

In another embodiment, an end of the short side parallel protruding portion may protrude outward beyond an end of the short side among the sides of the forming area along an extension direction of the short side parallel protruding portion.

In another embodiment, an end of the long side parallel protruding portion may be located adjacent to an end of the short side parallel protruding portion, and may not be connected to the short side parallel protruding portion.

In another embodiment, the protruding portion may further include a long side inclined protruding portion extended inclined with respect to the long side parallel protruding portion at an end of the long side parallel protruding portion.

In another embodiment, the protruding portion may further include a short side inclined protruding portion extended inclined with respect to the short side parallel protruding portion at an end of the short side parallel protruding portion.

In another embodiment, the protruding portion may further include a guide protruding portion extended across between the end of the long side parallel protruding portion and the end of the short side parallel protruding portion.

In another embodiment, the protruding portion may further include a guide protruding portion extended in a direction that interrupts in between the end of the long side parallel protruding portion and the end of the short side parallel protruding portion.

In another embodiment, a height of the protruding portion may be 0.5 mm or more and less than 2 mm.

In another embodiment, the protruding portion may have a horizontal portion spaced apart upward from the support area and formed horizontally, a curved portion of a curved shape extended from an end of the horizontal portion, and a vertical portion extended from an end that is not connected to the horizontal portion among two ends of the curved portion toward the support area.

In another embodiment, the stripper may include a stripper body having a pressing surface configured to press the pouch film, the stripper body forming an exterior of the stripper, a ceiling inner wall formed horizontally within the stripper body, a vertical inner wall formed within the stripper body vertically upward from the pressing surface to define the receding portion together with the ceiling inner wall, and a connection portion of a curved shape connecting a lower end of the vertical inner wall to the pressing surface.

In another embodiment, the pouch film may include a metal layer of stainless steel.

### ADVANTAGEOUS EFFECTS

According to the present disclosure, it may be possible to reduce or prevent cracks or wrinkles in the pouch film during the forming process of the pouch film by locally pressing the pouch film strongly through the local press portion.

### BRIEF DESCRIPTION OF THE DRAWINGS

FIG. 1 is a diagram showing an example of a pouch-type secondary battery.
FIG. 2 is a perspective view showing a pouch making apparatus according to Embodiment 1 of the present disclosure.
FIG. 3 is a cross-sectional view of the pouch making apparatus of FIG. 2.
FIG. 4 is a top view of a lower die of FIG. 2.
FIG. 5 is a perspective view of a pouch film formed by the pouch making apparatus of FIG. 2.
FIG. 6 is a plan view showing a first variation of a protruding portion of FIG. 2.
FIG. 7 is a plan view showing a second variation of a protruding portion of FIG. 2.
FIG. 8 is a plan view showing a third variation of a protruding portion of FIG. 2.
FIG. 9 is a plan view showing a fourth variation of a protruding portion of FIG. 2.
FIG. 10 is an enlarged cross-sectional view of a local press portion of FIG. 3.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

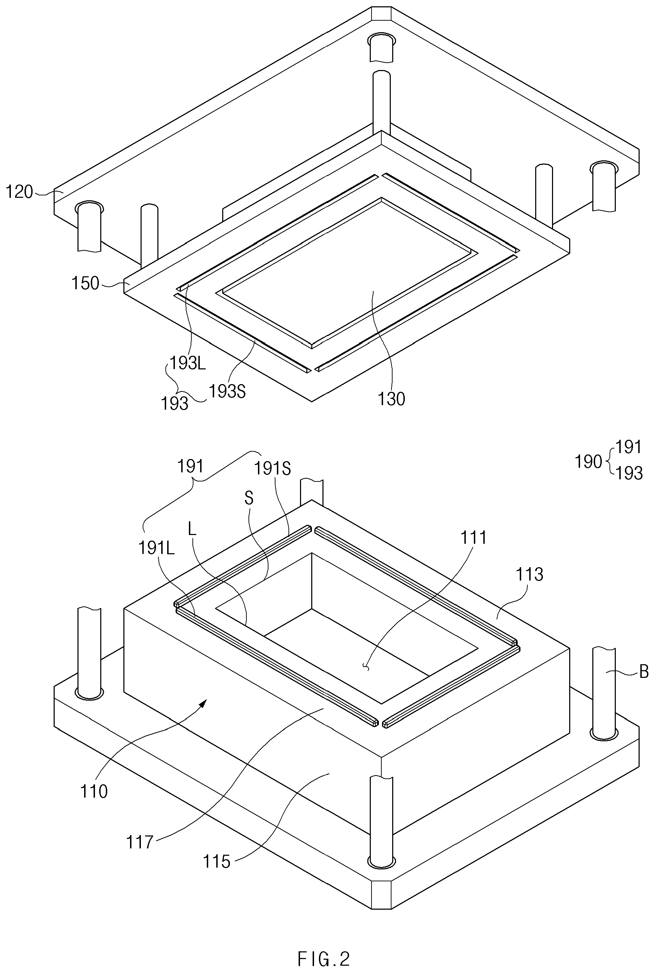

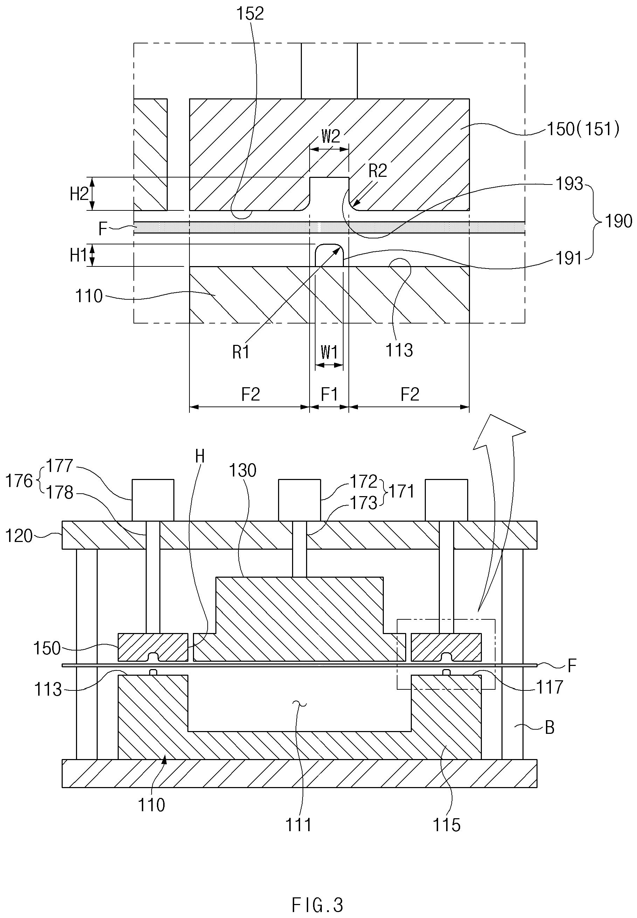

FIG. 2 is a perspective view showing a pouch making apparatus according to Embodiment 1 of the present disclosure, and FIG. 3 is a cross-sectional view of the pouch making apparatus of FIG. 2. As shown in FIGS. 2 and 3, the pouch making apparatus according to Embodiment 1 of the present disclosure may include a lower die 110, a punch 130 and a stripper 150. For reference, the description of Embodiment 1 may be equally applied to the following embodiment as long as they do not collide with each other.

### Basic structure of pouch making apparatus

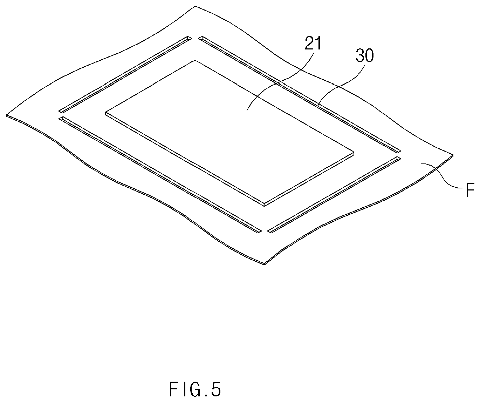

The lower die 110 may include a forming area 111 that is recessed inward to form a cup portion 21 (see FIG. 5) in a pouch film F (see FIG. 3). The forming area 111 may be a groove or a hole that is recessed downward from an upper surface 117 of a lower die body 115 that forms the exterior of the lower die 110. The lower die 110 may include a support area 113 that is generally flat on the outer side of the forming area 111. The support area 113 may be all or part of the upper surface 117 of the lower die body 115 around the forming area 111.

The punch 130 may be a block configured to press the pouch film F placed on the lower die 110 toward the forming area 111. By the pressing, the cup portion 21 may be formed in the pouch film F. The punch 130 may be supported by an upper die 120 that is disposed above the lower die 110, spaced apart from the lower die 110. A connection column B may be present between the upper die 120 and the lower die 110 to maintain a gap between them. Cylinders 171, 176 may be disposed at the upper die 120 to move up and down the punch 130 or the stripper 150 as described below.

The punch 130 may be configured to move toward the forming area 111 in a state that it is supported by the upper die 120. For example, the punch 130 may be connected to the punch cylinder 171 fixed to the upper die 120, thus indirectly fixed to the upper die 120, and move in the upward and downward directions with respect to the upper die 120 by the operation of the punch cylinder 171. The punch cylinder 171 may include a cylinder body 172, and a cylinder rod 173 that makes a reciprocating motion by the fluid pressure supplied into the cylinder body 172. The punch 130 may be connected to the cylinder rod 173 of the punch cylinder 171.

The stripper 150 may be used to support the pouch film F while the pouch film F is pressed by the punch 130, and configured to press the pouch film F placed on the lower die 110 toward the support area 113 of the lower die 110. The stripper 150 may hold the pouch film F through the pressing. The stripper 150 may be connected to the stripper cylinder 176 fixed to the upper die 120, thus indirectly fixed to the upper die 120. The stripper 150 may move in the upward and downward directions with respect to the upper die 120 by the operation of the stripper cylinder 176. The stripper cylinder 176 may include a cylinder body 177, and a cylinder rod 178 that makes a reciprocating motion by the fluid pressure supplied into the cylinder body 177. The stripper 150 may be connected to the cylinder rod 178. FIG. 2 shows the stripper 150 in a rectangular shape as a whole, specifically, in the shape of an album frame having a rectangular hole H (see FIG. 3) inside. The punch 130 may move in the upward and downward direction past the stripper 150 through the hole H at the central part of the stripper 150.

Hereinafter, the forming process of the pouch film F by the pouch making apparatus of this embodiment will be described with reference to FIG. 3. When the pouch film F is placed on the lower die 110, the stripper 150 moves down by the stripper cylinder 176. The stripper 150 may press the pouch film F placed on the support area 113 of the lower die 110 to hold the pouch film F during the forming process of the pouch film F. Subsequently, the punch 130 moves down by the punch cylinder 171. Then, the pouch film F may be pressed to form the cup portion 21 (see FIG. 5). Subsequently, the punch 130 moves up by the punch cylinder 171.

### Local press portion of pouch making apparatus

As shown in FIGS. 2 and 3, the pouch making apparatus according to Embodiment 1 of the present disclosure may include a local press portion 190. The local press portion 190 may cause a first area F1 (see FIG. 3) to be pressed more strongly than a second area F2 among the first area F1 and the second area F2 of the pouch film F pressed by the stripper 150. The first area F1 may be a part of the pouch film F located between the stripper 150 and the support area 113 of the lower die 110. The second area F2 may be the other part of the pouch film F located between the stripper 150 and the support area 113 of the lower die 110. For example, when the part of the pouch film F located between the stripper 150 and the support area 113 is divided into two or more areas, any one of the areas may be the first area F1 and the other one may be the second area F2. FIG. 3 shows that a part corresponding to a protruding portion 191 as described below is the first area F1 and the remaining part is the second area F2. The local press portion 190 may cause the part (the first area) of the area (e.g., the first area and the second area) of the pouch film F located between the stripper 150 and the support area 113 to be pressed more strongly.

The local press portion 190 may reduce or prevent cracks or wrinkles in the pouch film F during the forming process through the locally pressing. Without the local press portion 190, the part of the pouch film F located between the stripper 150 and the support area 113 will be generally uniformly pressed by the stripper 150 during the forming process. However, the uniform pressing is likely to cause wrinkles near the part of the pouch film F that is pressed by the punch 130. However, with the local press portion 190, the part (the first area) of the area of the pouch film F located between the stripper 150 and the support area 113 is pressed more strongly, causing less wrinkles.

The local press portion 190 may include the protruding portion 191 in any one of the stripper 150 and the support area 113 facing the stripper 150. The local press portion 190 may include a receding portion 193 in the other one of the stripper 150 and the support area 113 facing the stripper 150. FIGS. 2 and 3 show the receding portion 193 in the stripper 150 and the protruding portion 191 in the support area 113.

The protruding portion 191 may be formed to match the receding portion 193. Here, the matching refers to location matching, rather than shape matching. For example, the protruding portion 191 may have a semicircular cross section, and the receding portion 193 may have a quadrilateral cross section. However, the protruding portion 191 and the receding portion 193 may be formed at a location at which the stripper 150 and the support area 113 meet when the stripper 150 and the support area 113 are closer to each other by the movement of the stripper 150.

The protruding portion 191 may protrude toward the receding portion 193. The receding portion 193 may be recessed to accommodate the protruding portion 191. When the stripper 150 and the support area 113 are closer to each other by the movement of the stripper 150, the protruding portion 191 may be inserted into the receding portion 193.

When the protruding portion 191 and the receding portion 193 are formed, the part (e.g., the first area) of the pouch film F that is pressed by the protruding portion 191 may be pressed more strongly than the part (e.g., the second area) that is pressed without the protruding portion 191 by the facing surfaces of the stripper 150 and the support area 113.

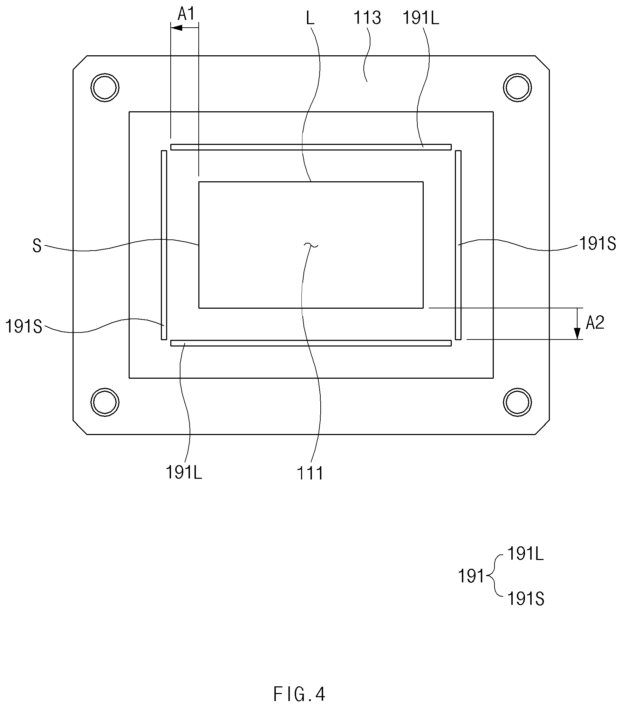

Meanwhile, as shown in FIG. 4, the protruding portion 191 may include a long side parallel protruding portion 191L disposed parallel to a long side L among the sides of the forming area 111, and a short side parallel protruding portion 191S disposed parallel to a short side S extended perpendicularly to the long side L among the sides of the forming area 111. FIG. 4 is a top view of the lower die 110 of FIG. 2. The receding portion 193 also may include a long side parallel receding portion 193L (see FIG. 2) that matches the long side parallel protruding portion 191L, and a short side parallel receding portion 193S (see FIG. 2) that matches the short side parallel protruding portion 191S.

In this configuration, the protruding portion 191 and the receding portion 193 may be arranged such that they encompass, at least in part, the part of the pouch film F that is pressed by the punch 130, thereby further suppressing wrinkles. As shown in FIG. 4, a pair of long side parallel protruding portions 191L and a pair of short side parallel protruding portions 191S may be present to completely encompass the part of the pouch film F that is pressed by the punch 130. The same is the case with the long side parallel receding portion 193L and the short side parallel receding portion 193S. For reference, when the forming area 111 has a rectangular cross section, the long side L of the forming area 111 may be longer than the short side S of the forming area 111. However, when the forming area 111 has a square cross section, in the present disclosure, the long side L and the short side S of the forming area 111 may be the sides of the same length.

Meanwhile, the end of the long side parallel protruding portion 191L may protrude outward beyond the end of the long side L among the sides of the forming area 111 along the extension direction of the long side parallel protruding portion 191L (see A1 in FIG. 4). The two ends of the long side parallel protruding portion 191L may protrude outward beyond the two ends of the long side L among the sides of the forming area 111. The long side parallel receding portion 193L also may be formed to match the long side parallel protruding portion 191L. The end of the short side parallel protruding portion 191S also may protrude outward beyond the end of the short side S among the sides of the forming area 111 along the extension direction of the short side parallel protruding portion 191S (see A2 in FIG. 4). The two ends of the short side parallel protruding portion 191S may protrude outward beyond the two ends of the short side S among the sides of the forming area 111. The short side parallel receding portion 193S also may be formed to match the short side parallel protruding portion 191S.

The end of the long side parallel protruding portion 191L may be disposed near the end of the short side parallel protruding portion 191S, but may not be connected to the short side parallel protruding portion 191S. To match them, the long side parallel receding portion 193L and the short side parallel receding portion 193S may be formed. The long side parallel protruding portion 191L and the short side parallel protruding portion 191S disposed around almost all of the forming area 111 of the lower die 110 may be effective in suppressing wrinkles. However, when the long side parallel protruding portion 191L and the short side parallel protruding portion 191S are disposed around all the forming area 111, wrinkling may occur near a vertex formed by the intersection of the long side parallel protruding portion 191L and the short side parallel protruding portion 191S.

When the pouch film F is formed by the making apparatus of this embodiment, the pouch film having the shape of FIG. 5 may be obtained. FIG. 5 is a perspective view of the pouch film formed by the pouch making apparatus of FIG. 2. When a part of the pouch film F is pressed by the punch 130, the cup portion 21 may be formed. When the other part of the pouch film F is pressed by the protruding portion 191, a groove 30 may be formed. When two sheets of pouch films of FIG. 5 are prepared and coupled to each other with an electrode assembly interposed between them, a pouch-type battery may be obtained. The groove 30 part may be cut in the manufacturing process of the pouch-type battery.

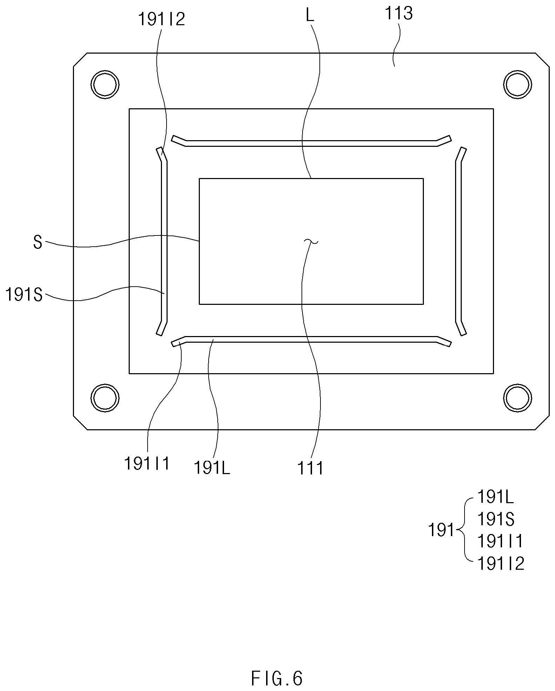

Meanwhile, as shown in FIG. 6, the protruding portion 191 may further include a long side inclined protruding portion 191I1 extended inclined with respect to the long side parallel protruding portion 191L at the end of the long side parallel protruding portion 191L. As shown in FIG. 6, the protruding portion 191 may further include a short side inclined protruding portion 191I2 extended inclined with respect to the short side parallel protruding portion 191S at the end of the short side parallel protruding portion 191S. FIG. 6 is a plan view showing a first variation of the protruding portion of FIG. 2. Each long side inclined protruding portion 191I1 may be disposed at each of the two ends of the long side parallel protruding portion 191L. Each short side inclined protruding portion 191I2 may be also disposed at each of the two ends of the short side parallel protruding portion 191S. The inclined protruding portions 191I1, 191I2 may not be connected to each other. The inclined protruding portions 191I1, 191I2 may be extended inclined at each end in a direction facing away from the vertex formed by the intersection of the long side L and the short side S among the sides of the forming area 111. The inclined protruding portions 191I1, 191I2 may guide the movement of the pouch film F that may occur near the vertex during the forming process of the pouch film F (see FIG. 3), and thereby the improvement of movement may further suppress wrinkles near the vertex.

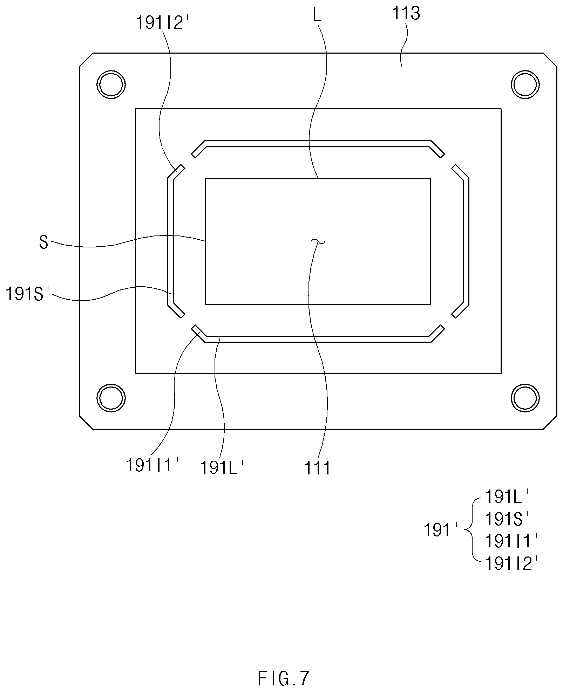

The protruding portion 191 of FIG. 2 may be modified as shown in FIG. 7. FIG. 7 is a plan view showing a second variation of the protruding portion of FIG. 2. The protruding portion 191' of FIG. 7 may include a long side parallel protruding portion 191L' and a short side parallel protruding portion 191S'. The protruding portion 191' may further include a long side inclined protruding portion 191I1' extended inclined with respect to the long side parallel protruding portion 191L' at the end of the long side parallel protruding portion 191L'. The protruding portion 191' may further include a short side inclined protruding portion 191I2' extended inclined with respect to the short side parallel protruding portion 191S' at the end of the short side parallel protruding portion 191S'. As opposed to the inclined protruding portions 191I1, 191I2 of FIG. 6, the inclined protruding portions 191I1', 191I2' of FIG. 7 may be extended inclined at each end in a direction closer to the vertex between the long side L and the short side S. For example, the inclined protruding portions 191I1', 191I2' of FIG. 7 may be extended facing each other at each end. The inclined protruding portions 191I1', 191I2' of FIG. 7 also may further suppress wrinkling near the vertex.

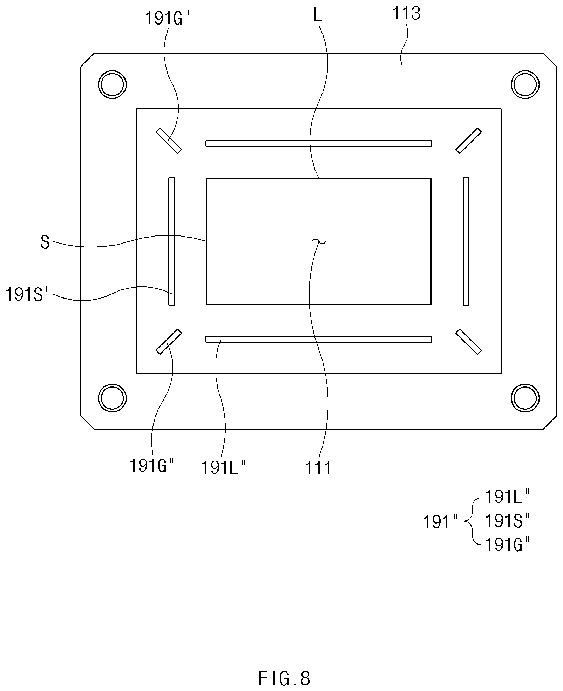

The protruding portion 191 of FIG. 2 may be modified as shown in FIG. 8. FIG. 8 is a plan view showing a third variation of the protruding portion of FIG. 2. The protruding portion 191' of FIG. 8 may include a long side parallel protruding portion 191L" and a short side parallel protruding portion 191S". The protruding portion 191" may further include a guide protruding portion 191G" extended across between the end of the long side parallel protruding portion 191L" and the end of the short side parallel protruding portion 191S". For example, the guide protruding portion 191G" may be extended in a direction that connects a vertex formed by the intersection of an extension line of the long side parallel protruding portion 191L" and an extension line of the short side parallel protruding portion 191S" to a vertex formed by the intersection of the long side L and the short side S of the forming area 111. FIG. 8 shows four guide protruding portions 191G" corresponding to the four vertices of the forming area 111 by way of example. The guide protruding portion 191G" may guide the movement of the pouch film F that may occur near the vertex of the forming area 111 during the forming process of the pouch film F, and thereby the improvement of movement may further suppress wrinkles near the vertex.

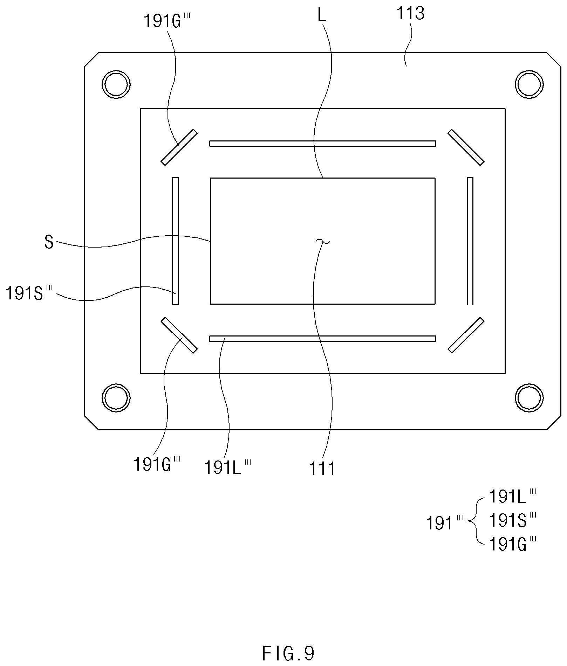

The protruding portion 191 of FIG. 2 may be modified as shown in FIG. 9. FIG. 9 is a plan view showing a fourth variation of the protruding portion of FIG. 2. The protruding portion 191‴ of FIG. 9 may include a long side parallel protruding portion 191L‴ and a short side parallel protruding portion 191S"'. The protruding portion 191‴ may further include a guide protruding portion 191G‴ extended in a direction that interrupts in between the end of the long side parallel protruding portion 191L‴ and the end of the short side parallel protruding portion 191S‴. For example, the guide protruding portion 191G‴ may be extended in a direction perpendicular to a straight line connecting a vertex formed by the intersection of an extension line of the long side parallel protruding portion 191L‴ and an extension line of the short side parallel protruding portion 191S‴ to a vertex formed by the intersection of the long side L and the short side S of the forming area 111. The guide protruding portion 191G‴ may be extended generally parallel to a straight line connecting the end of the long side parallel protruding portion 191L‴ to the end of the short side parallel protruding portion 191S‴. FIG. 9 exemplarily shows four guide protruding portions 191G‴ corresponding to the four vertices of the forming area 111. The guide protruding portion 191G‴ of FIG. 9 may further suppress wrinkles near the vertex of the forming area 111.

### Protruding portion and receding portion of local press portion

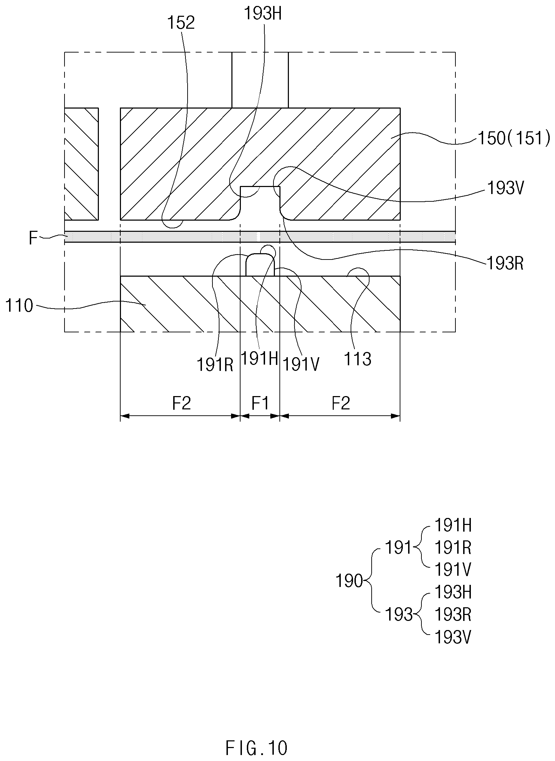

The protruding portion 191 and the receding portion 193 of the local press portion 190 will be described with reference to FIG. 10. FIG. 10 is an enlarged cross-sectional view of the local press portion of FIG. 3.

The protruding portion 191 may include a horizontal portion 191H formed horizontally, a vertical portion 191V formed vertically, and a curved portion 191R of a curved shape connecting the horizontal portion 191H to the vertical portion 191V. When the protruding portion 191 is formed at the support area 113 of the lower die 110, the horizontal portion 191H may be located above, spaced apart from the support area 113. The curved portion 191R may be extended from an end of the horizontal portion 191H. The curved portion 191R may be extended from each of two ends of the horizontal portion 191H. The vertical portion 191V may be extended from an end of the curved portion 191R that is not connected to the horizontal portion 191H among two ends of the curved portion 191R toward the support area 113.

When the protruding portion 191 includes the curved portion 191R, the protruding portion 191 has the rounded edge, thereby preventing damage to the pouch film F while the pouch film F is pressed by the local press portion 190. For reference, each of the horizontal portion 191H, the vertical portion 191V and the curved portion 191R of the protruding portion 191 may be one of the sides of the protruding portion 191.

The receding portion 193 may be defined as a space surrounded by inner walls 193H, 193V inside a stripper body 151 that forms the exterior of the stripper 150. More specifically, the stripper 150 may include the stripper body 151 that forms the exterior of the stripper 150, the ceiling inner wall 193H formed horizontally within the stripper body 151, and the vertical inner wall 193V formed within the stripper body 151 vertically upward from a pressing surface 152 of the stripper body 151. The vertical inner wall 193V may define the receding portion 193 together with the ceiling inner wall 193H.

The stripper 150 may include a connection portion 193R of a curved shape connecting the lower end of the vertical inner wall 193V to the pressing surface 152. The connection portion 193R may prevent damage to the pouch film F during the pressing by the local press portion 190, through the gently bent shape. For reference, the pressing surface 152 of the stripper body 151 is configured to press the pouch film F, and may be a part of the outer bottom surface of the stripper body 151.

Meanwhile, a height H1 (see FIG. 3) of the protruding portion 191, for example, a distance from the upper surface of the support area 113 to the horizontal portion 191H (see FIG. 10) of the protruding portion 191 may be 0.5 mm or more and less than 2 mm. When the height of the protruding portion 191 is less than 0.5 mm or 2 mm or more, wrinkling may not be adequately prevented.

### Structure of pouch film F

Recently, there is a need for pouch-type batteries in which venting occurs at a specific location at very high temperature (e.g., 1,000°C). The existing pouch-type batteries generally have the sealing portion 23 (see FIG. 1) formed by heat fusion between resin layers (layers formed from polypropylene) of the pouch film F, and at very high temperature, the resin layers melt and venting may occur at an unintended location.

To solve this problem, there are approaches to form the sealing portion by welding metal layers (e.g., layers of stainless steel) having high melting point. When the sealing portion is formed as described above, the sealing portion may not rupture at very high temperature due to very high sealing strength of the sealing portion.

The pouch making apparatus of this embodiment may be suitable to use for manufacturing a pouch through the pouch film F including the metal layers such as stainless steel. Because metals such as stainless steel have higher stiffness, the existing making apparatus is very vulnerable to cracking in the pouch film F during the forming process, but in such instances, the pouch making apparatus of this embodiment may minimize cracks.

For reference, the pouch film F may include a metal layer including stainless steel, a first resin layer on the inner side of the metal layer, and a second resin layer on the outer side of the metal layer. The first resin layer may be a layer of polypropylene (PP). The first resin layer requires high insulation and corrosion resistance, and another type of resin that meets these requirements may be used to form the first resin layer. A part of the metal layers that will be welded may not have the first resin layer. The second resin layer may be a layer of polyethylene terephthalate (PET). The second resin layer needs to protect and electrically insulate a secondary battery, and another type of resin that meets these requirements may be used to form the second resin layer. The pouch film F may have any one of the first resin layer and the second resin layer or neither.

## Claims

1. A pouch making apparatus comprising:
a lower die (110) including a forming area (111) that is recessed inward to form a cup portion (21) in a pouch film (F), and a support area (113) that is flat on an outer side of the forming area (111);
a punch (130) configured to press the pouch film (F) to be placed on the lower die (110) toward the forming area (111);
a stripper (150) configured to press the pouch film (F) toward the support area (113) in order to support the pouch film (F) during the pressing by the punch (130); and
a local press portion (190) to cause a first area to be pressed more strongly than a second area among the first area and the second area of the pouch film (F) pressed by the stripper (150), wherein the local press portion (190) includes:
a protruding portion (191) in any one of the stripper (150) and the support area (113) facing the stripper (150); and
a receding portion (193) that matches the protruding portion (191) in the other one of the stripper (150) and the support area (113) facing the stripper (150),
wherein the protruding portion (191, 191') includes a long side parallel protruding portion (191L, 191L') disposed parallel to a long side (L) among sides of the forming area (111), and a short side parallel protruding portion (191S, ) disposed parallel to a short side (S) extended perpendicularly to the long side (L) among the sides of the forming area (111), **characterized in that**
the protruding portion (191, 191') further includes a long side inclined protruding portion (191I1, 191I1') extended inclined with respect to the long side parallel protruding portion (191L, 191L') at an end of the long side parallel protruding portion (191L, 191L').

2. A pouch making apparatus comprising:
a lower die (110) including a forming area (111) that is recessed inward to form a cup portion (21) in a pouch film (F), and a support area (113) that is flat on an outer side of the forming area (111);
a punch (130) configured to press the pouch film (F) to be placed on the lower die (110) toward the forming area (111);
a stripper (150) configured to press the pouch film (F) toward the support area (113) in order to support the pouch film (F) during the pressing by the punch (130); and
a local press portion (190) to cause a first area to be pressed more strongly than a second area among the first area and the second area of the pouch film (F) pressed by the stripper (150), wherein the local press portion (190) includes:
a protruding portion (191, 191') in any one of the stripper (150) and the support area (113) facing the stripper (150); and
a receding portion (193) that matches the protruding portion (191, 191', ) in the other one of the stripper (150) and the support area (113) facing the stripper (150),
wherein the protruding portion (191, 191', 191", 191"') includes a long side parallel protruding portion (191L, 191L', 191L", 191L‴) disposed parallel to a long side (L) among sides of the forming area (111), and a short side parallel protruding portion (191S, 191S',) disposed parallel to a short side (S) extended perpendicularly to the long side (L) among the sides of the forming area (111) , **characterized in that**
the protruding portion (191, 191') further includes a short side inclined protruding portion (191I2, 191I2') extended inclined with respect to the short side parallel protruding portion (191S, 191S') at an end of the short side parallel protruding portion (191S, 191S').

3. The pouch making apparatus according to claim 1 or 2, wherein an end of the long side parallel protruding portion (191L, 191L', ) protrudes outward beyond an end of the long side (L) among the sides of the forming area (111) along an extension direction of the long side parallel protruding portion (191L, 191L').

4. The pouch making apparatus according to claim 1 or 2, wherein an end of the short side parallel protruding portion (191S, 191S') protrudes outward beyond an end of the short side (S) among the sides of the forming area (111) along an extension direction of the short side parallel protruding portion (191S, 191S').

5. A pouch making apparatus comprising:
a lower die (110) including a forming area (111) that is recessed inward to form a cup portion (21) in a pouch film (F), and a support area (113) that is flat on an outer side of the forming area (111);
a punch (130) configured to press the pouch film (F) to be placed on the lower die (110) toward the forming area (111);
a stripper (150) configured to press the pouch film (F) toward the support area (113) in order to support the pouch film (F) during the pressing by the punch (130); and
a local press portion (190) to cause a first area to be pressed more strongly than a second area among the first area and the second area of the pouch film (F) pressed by the stripper (150), wherein the local press portion (190) includes:
a protruding portion (191") in any one of the stripper (150) and the support area (113) facing the stripper (150); and
a receding portion (193) that matches the protruding portion (191") in the other one of the stripper (150) and the support area (113) facing the stripper (150),
wherein the protruding portion (191") includes a long side parallel protruding portion (191L") disposed parallel to a long side (L) among sides of the forming area (111), and a short side parallel protruding portion (191S") disposed parallel to a short side (S) extended perpendicularly to the long side (L) among the sides of the forming area (111),
wherein an end of the long side parallel protruding portion (191L") is located adjacent to an end of the short side parallel protruding portion (191S"), and is not connected to the short side parallel protruding portion (191S"), **characterized in that**
the protruding portion (191") further includes a guide protruding portion (191G") extended across between the end of the long side parallel protruding portion (191L") and the end of the short side parallel protruding portion (191S").

6. A pouch making apparatus comprising:
a lower die (110) including a forming area (111) that is recessed inward to form a cup portion (21) in a pouch film (F), and a support area (113) that is flat on an outer side of the forming area (111);
a punch (130) configured to press the pouch film (F) to be placed on the lower die (110) toward the forming area (111);
a stripper (150) configured to press the pouch film (F) toward the support area (113) in order to support the pouch film (F) during the pressing by the punch (130); and
a local press portion (190) to cause a first area to be pressed more strongly than a second area among the first area and the second area of the pouch film (F) pressed by the stripper (150), wherein the local press portion (190) includes:
a protruding portion (191"') in any one of the stripper (150) and the support area (113) facing the stripper (150); and
a receding portion (193) that matches the protruding portion (191‴) in the other one of the stripper (150) and the support area (113) facing the stripper (150),
wherein the protruding portion (191‴) includes a long side parallel protruding portion (191L‴) disposed parallel to a long side (L) among sides of the forming area (111), and a short side parallel protruding portion (191S‴) disposed parallel to a short side (S) extended perpendicularly to the long side (L) among the sides of the forming area (111),
wherein an end of the long side parallel protruding portion (191L‴) is located adjacent to an end of the short side parallel protruding portion (191S‴), and is not connected to the short side parallel protruding portion (191S‴), **characterized in that**
the protruding portion (191‴) further includes a guide protruding portion (191G‴) extended in a direction that interrupts in between the end of the long side parallel protruding portion (191L‴) and the end of the short side parallel protruding portion (191S‴).

7. The pouch making apparatus according to one of the preceding claims, wherein a height (H1) of the protruding portion (191, 191', 191", 191"') is 0.5 mm or more and less than 2 mm.

8. The pouch making apparatus according to one of the preceding claims, wherein the protruding portion (191, 191', 191", 191"') has:
a horizontal portion (191H) spaced apart upward from the support area (113) and formed horizontally;
a curved portion (191R) of a curved shape extended from an end of the horizontal portion (191H); and
a vertical portion (191V) extended from an end that is not connected to the horizontal portion (191H) among two ends of the curved portion (191R) toward the support area (113).

9. The pouch making apparatus according to one of the preceding claims, wherein the stripper (150) includes:
a stripper body (151) having a pressing surface (152) configured to press the pouch film (F), the stripper body (151) forming an exterior of the stripper (150);
a ceiling inner wall (193H) formed horizontally within the stripper body (151);
a vertical inner wall (193V) formed within the stripper body (151) vertically upward from the pressing surface (152) to define the receding portion (193) together with the ceiling inner wall (193H); and
a connection portion (193R)) of a curved shape connecting a lower end of the vertical inner wall (193V) to the pressing surface (152).

10. The pouch making apparatus according to one of the preceding claims, wherein the protruding portion (191, 191', 191", 191‴) protrudes toward the receding portion (193), and
wherein the receding portion (193) is recessed to accommodate the protruding portion (191, 191', 191", 191‴).

## Patentansprüche

1. Vorrichtung zur Herstellung von Pouches, umfassend:
eine untere Matrize (110) mit einem Formbereich (111), der nach innen vertieft ist, um in einer Pouchfolie (F) einen Becherabschnitt (21) zu bilden, und einem Stützbereich (113), der an einer Außenseite des Formbereichs (111) flach ist;
einen Stempel (130), der so ausgebildet ist, dass er die auf die untere Matrize (110) zu legende Pouchfolie (F) in Richtung des Formbereichs (111) drückt;
einen Abstreifer (150), der so ausgebildet ist, dass er die Pouchfolie (F) in Richtung des Stützbereichs (113) drückt, um die Pouchfolie (F) während des Drückens durch den Stempel (130) zu stützen; und
einen lokalen Pressabschnitt (190), um zu bewirken, dass ein erster Bereich stärker gepresst wird als ein zweiter Bereich von dem ersten Bereich und dem zweiten Bereich der durch den Abstreifer (150) gepressten Pouchfolie (F), wobei der lokale Pressabschnitt (190) umfasst:
einen vorstehenden Abschnitt (191) in entweder dem Abstreifer (150) oder dem dem Abstreifer (150) zugewandten Stützbereich (113); und
einen zurückgesetzten Abschnitt (193), der zu dem vorstehenden Abschnitt (191) in dem anderen, dem Abstreifer (150) oder dem dem Abstreifer (150) zugewandten Stützbereich (113), passt,
wobei der vorstehende Abschnitt (191, 191') einen parallel zur Längsseite (L) verlaufenden, langseitigen vorstehenden Abschnitt (191L, 191L') umfasst, der parallel zu einer Längsseite (L) der Seiten des Formbereichs (111) angeordnet ist, sowie einen zur kurzen Seite (S) parallelen Vorsprung (191S, ), der parallel zu einer kurzen Seite (S) angeordnet ist, die sich senkrecht zur Längsseite (L) der Seiten des Formbereichs (111) erstreckt, **dadurch gekennzeichnet, dass**
der vorstehende Abschnitt (191, 191') ferner einen zur Längsseite (L) geneigten vorstehenden Abschnitt (191I1, 191I1') umfasst, der sich an einem Ende des zur Längsseite (L) parallelen vorstehenden Abschnitt (191L, 191L') geneigt zu diesem erstreckt.

2. Vorrichtung zur Herstellung von Pouches, umfassend:
eine untere Matrize (110) mit einem Formbereich (111), der nach innen vertieft ist, um einen Becherabschnitt (21) in einer Pouchfolie (F) zu bilden, und einem Stützbereich (113), der an einer Außenseite des Formbereichs (111) flach ist;
einen Stempel (130), der so ausgebildet ist, dass er die auf die untere Matrize (110) zu legende Pouchfolie (F) in Richtung des Formbereichs (111) drückt;
einen Abstreifer (150), der so ausgebildet ist, dass er die Pouchfolie (F) in Richtung des Stützbereichs (113) drückt, um die Pouchfolie (F) während des Drückens durch den Stempel (130) zu stützen; und
einen lokalen Pressabschnitt (190), um zu bewirken, dass ein erster Bereich stärker gepresst wird als ein zweiter Bereich von dem ersten Bereich und dem zweiten Bereich der durch den Abstreifer (150) gepressten Pouchfolie (F), wobei der lokale Pressabschnitt (190) umfasst:
einen vorstehenden Abschnitt (191, 191') in entweder dem Abstreifer (150) oder dem dem Abstreifer (150) zugewandten Stützbereich (113); und
einen zurückgesetzten Abschnitt (193), der zu dem vorstehenden Abschnitt (191, 191') in dem anderen, dem Abstreifer (150) oder dem dem Abstreifer (150) zugewandten Stützbereich (113), passt,
wobei der vorstehende Abschnitt (191, 191', 191", 191‴) einen zur Längsseite (L) des Formbereichs (111) parallelen, langseitigen vorstehenden Abschnitt (191L, 191L', 191L", 191L‴), der parallel zu einer Längsseite (L) der Seiten des Formbereichs (111) angeordnet ist, und einen zur kurzen Seite parallelen vorstehenden Abschnitt (191S, 191S',), der parallel zu einer kurzen Seite (S) angeordnet ist, die sich senkrecht zur Längsseite (L) der Seiten des Formbereichs (111) erstreckt, aufweist, **dadurch gekennzeichnet, dass**
der vorstehende Abschnitt (191, 191') ferner einen schräg verlaufenden, zur kurzen Seite geneigten vorstehenden Abschnitt (191I2, 19112') umfasst, der sich an einem Ende des zur kurzen Seite parallelen vorstehenden Abschnitts (191S, 191S') schräg zu diesem erstreckt.

3. Vorrichtung zur Herstellung von Pouches nach Anspruch 1 oder 2, wobei ein Ende des an der Längsseite parallelen vorstehenden Abschnitts (191L, 191L') entlang einer Erstreckungsrichtung des an der Längsseite parallelen vorstehenden Abschnitts (191L, 191L') über ein Ende der Längsseite (L) der Seiten des Formbereichs (111) hinausragt.

4. Vorrichtung zur Herstellung von Pouches nach Anspruch 1 oder 2, wobei ein Ende des zur kurzen Seite parallelen vorstehenden Abschnitts (191S, 191S') entlang einer Erstreckungsrichtung des zur kurzen Seite parallelen vorstehenden Abschnitt (191S, 191S') über ein Ende der kurzen Seite (S) der Seiten des Formbereichs (111) hinaus nach außen vorsteht.

5. Vorrichtung zur Herstellung von Pouches, umfassend:
eine untere Matrize (110) mit einem Formbereich (111), der nach innen vertieft ist, um einen Becherabschnitt (21) in einer Pouchfolie (F) zu bilden, und einem Stützbereich (113), der an einer Außenseite des Formbereichs (111) flach ist;
einen Stempel (130), der so ausgebildet ist, dass er die auf die untere Matrize (110) zu legende Pouchfolie (F) in Richtung des Formbereichs (111) drückt;
einen Abstreifer (150), der so ausgebildet ist, dass er die Pouchfolie (F) in Richtung des Stützbereichs (113) drückt, um die Pouchfolie (F) während des Pressvorgangs durch den Stempel (130) zu stützen; und
einen lokalen Pressabschnitt (190), um zu bewirken, dass ein erster Bereich stärker gepresst wird ( ) als ein zweiter Bereich von dem ersten Bereich und dem zweiten Bereich der durch den Abstreifer (150) gepressten Pouchfolie (F), wobei der lokale Pressabschnitt (190) umfasst:
einen vorstehenden Abschnitt (191") an entweder dem Abstreifer (150) oder dem dem Abstreifer (150) zugewandten Stützbereich (113); und
einen zurückgesetzten Abschnitt (193), der zu dem vorstehenden Abschnitt (191") in dem anderen, dem Abstreifer (150) und dem dem Abstreifer (150) zugewandten Stützbereich (113), passt,
wobei der vorstehende Abschnitt (191") einen zur Längsseite (L) parallelen vorstehenden Abschnitt (191L") umfasst, der parallel zu einer Längsseite (L) der Seiten des Formbereichs (111) angeordnet ist, sowie einen zur kurzen Seite (S) parallelen vorstehenden Abschnitt (191S"), der parallel zu einer kurzen Seite (S) angeordnet ist, die sich senkrecht zur langen Seite (L) der Seiten des Formbereichs (111) erstreckt,
wobei ein Ende des zur Längsseite parallelen vorstehenden Abschnitt (191L") benachbart zu einem Ende des zur Querseite parallelen vorstehenden Abschnitt (191S") angeordnet ist und nicht mit dem zur Querseite parallelen vorstehenden Abschnitt (191S") verbunden ist, **dadurch gekennzeichnet, dass**
der vorstehende Abschnitt (191") ferner einen Führungsvorsprung (191G") umfasst, der sich zwischen dem Ende des zur Längsseite parallelen vorstehenden Abschnitts (191L") und dem Ende des zur Querseite parallelen vorstehenden Abschnitts (191S") erstreckt.

6. Vorrichtung zur Herstellung von Pouches, umfassend:
eine untere Matrize (110) mit einem Formbereich (111), der nach innen vertieft ist, um einen Becherabschnitt (21) in einer Pouchfolie (F) zu bilden, und einem Stützbereich (113), der an einer Außenseite des Formbereichs (111) flach ist;
einen Stempel (130), der so ausgebildet ist, dass er die auf die untere Matrize (110) zu legende Pouchfolie (F) in Richtung des Formbereichs (111) drückt;
einen Abstreifer (150), der so ausgebildet ist, dass er die Pouchfolie (F) in Richtung des Stützbereichs (113) drückt, um die Pouchfolie (F) während des Pressvorgangs durch den Stempel (130) zu stützen; und
einen lokalen Pressabschnitt (190), um zu bewirken, dass ein erster Bereich stärker gepresst wird als ein zweiter Bereich von dem ersten Bereich und dem zweiten Bereich der durch den Abstreifer (150) gepressten Pouchfolie (F), wobei der lokale Pressabschnitt (190) umfasst:
einen vorstehenden Abschnitt (191‴) an entweder dem Abstreifer (150) oder dem Abstreifer (150) zugewandten Stützbereich (113); und
einen zurückgesetzten Abschnitt (193), der mit dem vorstehenden Abschnitt (191‴) in dem anderen, dem Abstreifer (150) oder dem Stützbereich (113), der dem Abstreifer (150) zugewandt ist, passt,
wobei der vorstehende Abschnitt (191‴) einen zur Längsseite (L) parallelen vorstehenden Abschnitt (191L‴) umfasst, der parallel zu einer Längsseite (L) der Seiten des Formbereichs (111) angeordnet ist, sowie einen zur kurzen Seite (S) parallelen vorstehenden Abschnitt (191S‴), der parallel zu einer kurzen Seite (S) angeordnet ist, die sich senkrecht zur langen Seite (L) der Seiten des Formbereichs (111) erstreckt,
wobei ein Ende des zur Längsseite parallelen vorstehenden Abschnitt (191L‴) benachbart zu einem Ende des zur Querseite parallelen vorstehenden Abschnitt (191S‴) angeordnet ist und nicht mit dem zur Querseite parallelen vorstehenden Abschnitt (191S‴) verbunden ist, **dadurch gekennzeichnet, dass**
der vorstehenden Abschnitt (191‴) ferner einen Führungsvorsprung (191G‴) umfasst, der sich in einer Richtung erstreckt, die zwischen dem Ende des zur Längsseite parallelen vorstehenden Abschnitt (191L‴) und dem Ende des zur Querseite parallelen vorstehenden Abschnitt (191S‴) verläuft.

7. Vorrichtung zur Herstellung von Pouches nach einem der vorstehenden Ansprüche, wobei eine Höhe (H1) des vorstehenden Abschnitt (191, 191', 191", 191‴) 0,5 mm oder mehr und weniger als 2 mm beträgt.

8. Vorrichtung zur Herstellung von Pouches nach einem der vorstehenden Ansprüche, wobei der vorstehende Abschnitt (191, 191', 191", 191‴) aufweist:
einen horizontalen Abschnitt (191H), der nach oben vom Stützbereich (113) beabstandet und horizontal ausgebildet ist;
einen gekrümmten Abschnitt (191R) mit einer gekrümmten Form, der sich von einem Ende des horizontalen Abschnitts (191H) erstreckt; und
einen vertikalen Abschnitt (191V), der sich von einem Ende, das nicht mit dem horizontalen Abschnitt (191H) verbunden ist, der beiden Enden des gekrümmten Abschnitts (191R) in Richtung des Stützbereichs (113) erstreckt.

9. Vorrichtung zur Herstellung von Pouches gemäß einem der vorstehenden Ansprüche, wobei der Abstreifer (150) umfasst:
einen Abstreiferkörper (151) mit einer Andrückfläche (152), die so ausgebildet ist, dass sie die Pouchfolie (F) andrückt, wobei der Abstreiferkörper (151) eine Außenseite des Abstreifers (150) bildet;
eine Deckeninnenwand (193H), die horizontal innerhalb des Abstreiferkörpers (151) ausgebildet ist;
eine vertikale Innenwand (193V), die innerhalb des Abstreiferkörpers (151) vertikal nach oben von der Andruckfläche (152) ausgebildet ist, um zusammen mit der oberen Innenwand (193H) den zurückgesetzten Abschnitt (193) zu definieren; und
einen Verbindungsabschnitt (193R) mit gekrümmter Form, der ein unteres Ende der vertikalen Innenwand (193V) mit der Andrückfläche (152) verbindet.

10. Vorrichtung zur Herstellung von Pouches gemäß einem der vorstehenden Ansprüche, wobei der vorstehende Abschnitt (191, 191', 191", 191"') in Richtung des zurückgesetzte Abschnitts (193) des Abstreifers vorsteht, und
wobei der zurückgesetzte Abschnitt (193) vertieft ist, um den vorstehenden Abschnitt (191, 191', 191", 191‴) aufzunehmen.

## Revendications

1. Appareil de fabrication de poche comprenant :
une matrice inférieure (110) comprenant une zone de formage (111) évidée vers l'intérieur pour former une partie cupuliforme (21) dans un film de poche (F), et une zone de support (113) plate sur un côté extérieur de la zone de formage (111) ;
un poinçon (130) configuré pour presser le film de poche (F) à placer sur la matrice inférieure (110) vers la zone de formage (111) ;
un démouleur (150) configuré pour presser le film de poche (F) vers la zone de support (113) de façon à supporter le film de poche (F) au cours du pressage par le poinçon (130) ; et
une partie de pressage locale (190) déterminant un pressage plus ferme sur une première zone que sur une deuxième zone parmi la première zone et la deuxième zone du film de poche (F) pressé par le démouleur (150), la partie de pressage locale (190) comprenant :
une partie saillante (191) dans un quelconque du démouleur (150) et de la zone de support (113) située face au démouleur (150) ; et
une partie en retrait (193) correspondant à la partie saillante (191) dans l'autre du démouleur (150) et de la zone de support (113) située face au démouleur (150),
la partie saillante (191, 191') comprenant une partie saillante parallèle à côté long (191L, 191L'), disposée parallèlement à un côté long (L) parmi des côtés de la zone de formage (111), et une partie saillante parallèle à côté court (191S) disposée parallèlement à un côté court (S) qui s'étend perpendiculairement au côté long (L) parmi les côtés de la zone de formage (111), **caractérisée en ce que**
la partie saillante (191, 191') comprend en outre une partie saillante inclinée à côté long (191I1, 191I1'), qui s'étend de façon inclinée relativement à la partie saillante parallèle à côté long (191L, 191L') à un bout de la partie saillante parallèle à côté long (191L, 191L').

2. Appareil de fabrication de poche comprenant :
une matrice inférieure (110) comprenant une zone de formage (111) évidée vers l'intérieur pour former une partie cupuliforme (21) dans un film de poche (F), et une zone de support (113) plate sur un côté extérieur de la zone de formage (111) ;
un poinçon (130) configuré pour presser le film de poche (F) à placer sur la matrice inférieure (110) vers la zone de formage (111) ;
un démouleur (150) configuré pour presser le film de poche (F) vers la zone de support (113) de façon à supporter le film de poche (F) au cours du pressage par le poinçon (130) ; et
une partie de pressage locale (190) déterminant un pressage plus ferme sur une première zone que sur une deuxième zone parmi la première zone et la deuxième zone du film de poche (F) pressé par le démouleur (150), la partie de pressage locale (190) comprenant :
une partie saillante (191, 191') dans un quelconque du démouleur (150) et de la zone de support (113) située face au démouleur (150) ; et
une partie en retrait (193) correspondant à la partie saillante (191, 191') dans l'autre du démouleur (150) et de la zone de support (113) située face au démouleur (150),
la partie saillante (191, 191', 191", 191‴) comprenant une partie saillante parallèle à côté long (191L, 191L', 191L", 191L"'), disposée parallèlement à un côté long (L) parmi des côtés de la zone de formage (111), et une partie saillante parallèle à côté court (191S, 191S') disposée parallèlement à un côté court (S) qui s'étend perpendiculairement au côté long (L) parmi les côtés de la zone de formage (111), **caractérisé en ce que**
la partie saillante (191, 191') comprend en outre une partie saillante inclinée à côté long (19112, 19112'), qui s'étend de façon inclinée relativement à la partie saillante parallèle à côté court (191S, 191S') à un bout de la partie saillante parallèle à côté court (191S, 191S').

3. Appareil de fabrication de poche selon la revendication 1 ou 2, un bout de la partie saillante parallèle à côté long (191L, 191L') faisant saillie vers l'extérieur au-delà d'un bout du côté long (L) parmi les côtés de la zone de formage (111) dans une direction d'extension de la partie saillante parallèle à côté long (191L, 191L').

4. Appareil de fabrication de poche selon la revendication 1 ou 2, un bout de la partie saillante parallèle à côté court (191S, 191S') faisant saillie vers l'extérieur au-delà d'un bout du côté court (S) parmi les côtés de la zone de formage (111) dans une direction d'extension de la partie saillante parallèle à côté court (191S, 191S').

5. Appareil de fabrication de poche comprenant :
une matrice inférieure (110) comprenant une zone de formage (111) évidée vers l'intérieur pour former une partie cupuliforme (21) dans un film de poche (F), et une zone de support (113) plate sur un côté extérieur de la zone de formage (111) ;
un poinçon (130) configuré pour presser le film de poche (F) à placer sur la matrice inférieure (110) vers la zone de formage (111) ;
un démouleur (150) configuré pour presser le film de poche (F) vers la zone de support (113) de façon à supporter le film de poche (F) au cours du pressage par le poinçon (130) ; et
une partie de pressage locale (190) déterminant un pressage plus ferme sur une première zone que sur une deuxième zone parmi la première zone et la deuxième zone du film de poche (F) pressé par le démouleur (150), la partie de pressage locale (190) comprenant :
une partie saillante (191") dans un quelconque du démouleur (150) et de la zone de support (113) située face au démouleur (150) ; et
une partie en retrait (193) correspondant à la partie saillante (191") dans l'autre du démouleur (150) et de la zone de support (113) située face au démouleur (150),
la partie saillante (191") comprenant une partie saillante parallèle à côté long (191L"), disposée afin d'être parallèle à un côté long (L) parmi des côtés de la zone de formage (111), et une partie saillante parallèle à côté court (191S") disposée afin d'être parallèle à un côté court (S) qui s'étend perpendiculairement au côté long (L) parmi les côtés de la zone de formage (111),
un bout de la partie saillante parallèle à côté long (191L") étant situé dans une position adjacente à un bout de la partie saillante parallèle à côté court (191S"), et n'étant pas connecté à la partie saillante parallèle à côté court (191S"), **caractérisé en ce que**
la partie saillante (191") comprend en outre une partie saillante guide (191G") qui s'étend à travers, entre le bout de la partie saillante parallèle à côté long (191L") et le bout de la partie saillante parallèle à côté court (191S").

6. Appareil de fabrication de poche comprenant :
une matrice inférieure (110) comprenant une zone de formage (111) évidée vers l'intérieur pour former une partie cupuliforme (21) dans un film de poche (F), et une zone de support (113) plate sur un côté extérieur de la zone de formage (111) ;
un poinçon (130) configuré pour presser le film de poche (F) à placer sur la matrice inférieure (110) vers la zone de formage (111) ;
un démouleur (150) configuré pour presser le film de poche (F) vers la zone de support (113) de façon à supporter le film de poche (F) au cours du pressage par le poinçon (130) ; et
une partie de pressage locale (190) déterminant un pressage plus ferme sur une première zone que sur une deuxième zone, parmi la première zone et la deuxième zone du film de poche (F) pressé par le démouleur (150), la partie de pressage locale (190) comprenant :
une partie saillante (191‴) dans un quelconque du démouleur (150) et de la zone de support (113) faisant face au démouleur (150) ; et
une partie en retrait (193) correspondant à la partie saillante (191‴) dans l'autre du démouleur (150) et de la zone de support (113) située face au démouleur (150),
la partie saillante (191"') comprenant une partie saillante parallèle à côté long (191L"'), disposée parallèlement à un côté long (L) parmi des côtés de la zone de formage (111), et une partie saillante parallèle à côté court (191S‴) disposée parallèlement à un côté court (S) qui s'étend perpendiculairement au côté long (L) parmi les côtés de la zone de formage (111),
un bout de la partie saillante parallèle à côté long (191L‴) étant situé dans une position adjacente à un bout de la partie saillante parallèle à côté court (191S‴), et n'étant pas connecté à la partie saillante parallèle à côté court (191S‴), **caractérisé en ce que**
la partie saillante (191‴) comprend en outre une partie saillante guide (191G"') qui s'étend dans une direction qui s'interrompt entre le bout de la partie saillante parallèle à côté long (191L‴) et le bout de la partie saillante parallèle à côté court (191S‴).

7. Appareil de fabrication de poche selon une quelconque des revendications précédentes, une hauteur (H₁) de la partie saillante (191, 191', 191", 191‴) mesurant 0,5 mm ou davantage, et moins de 2 mm.

8. Appareil de fabrication de poche selon une quelconque des revendications précédentes, la partie saillante (191, 191', 191", 191‴) possédant :
une partie horizontale (191H) espacée vers le haut de la zone de support (113) et formée horizontalement ;
une partie recourbée (191R) de forme recourbée partant d'un bout de la partie horizontale (191H) ; et
une partie verticale (191V) partant d'un bout non connecté à la partie horizontale (191H) parmi deux bouts de la partie recourbée (191R) vers la zone de support (113).

9. Appareil de fabrication de poche selon une quelconque des revendications précédentes, le démouleur (150) comprenant :
un corps de démouleur (151) doté d'une surface de pressage (152) configurée pour presser le film de la poche (F), le corps de démouleur (151) formant un extérieur du démouleur (150) ;
une paroi intérieure à plafond (193H) formée horizontalement au sein du corps de démouleur (151) ;
une paroi intérieure verticale (193V) formée sein du corps de démouleur (151) verticalement vers le haut depuis la surface de pressage (152), pour définir la partie en retrait (193) conjointement avec la paroi intérieure à plafond (193H) ; et
une partie de raccordement (193R) de forme recourbée raccordant une extrémité inférieure de la paroi intérieure verticale (193V) à la surface de pressage (152).

10. Appareil de fabrication de poches selon une quelconque des revendications précédentes, la partie saillante (191, 191', 191", 191‴) faisant saillie vers la partie en retrait (193), et
la partie en retrait (193) étant évidée pour recevoir la partie saillante (191, 191', 191", 191‴).
